# EUROPÄISCHE PATENTSCHRIFT

(11) **EP 3 339 141 B1**
(45) Veröffentlichungstag und Bekanntmachung des Hinweises auf die Patenterteilung: **08.01.2020**
(21) Anmeldenummer: 17203230.2
(22) Anmeldetag: 23.11.2017
(51) Int. Cl.: B62D 25/16

(54) **KOTFLÜGEL MIT VERTIEFUNG**
WING WITH A RECESS
AILE DE VOITURE POURVUE D'ÉVIDEMENT

(30) Priorität: 23.12.2016 DE 102016015494
(43) Veröffentlichungstag der Anmeldung: 27.06.2018
(73) Patentinhaber: MAN Truck & Bus SE, 80995 München (DE)
(72) Erfinder: Hornik, Darius, 80995 München (DE)
(74) Vertreter: v. Bezold & Partner Patentanwälte - PartG mbB

(56) Entgegenhaltungen:
- EP-A1- 0 531 711
- EP-A1- 0 626 308
- EP-A1- 1 568 579
- EP-A1- 2 450 268
- DE-U1- 9 216 726

## Beschreibung

Die Erfindung betrifft einen Kotflügel für ein Fahrzeug mit zumindest einem Wandabschnitt zum zumindest abschnittsweisen Abdecken eines Kraftfahrzeugrads.

Als Stand der Technik sind zunächst die EP 1 568 579 A1, die EP 0 626 308 A1 sowie die EP 0 531 711 A1 zu nennen.

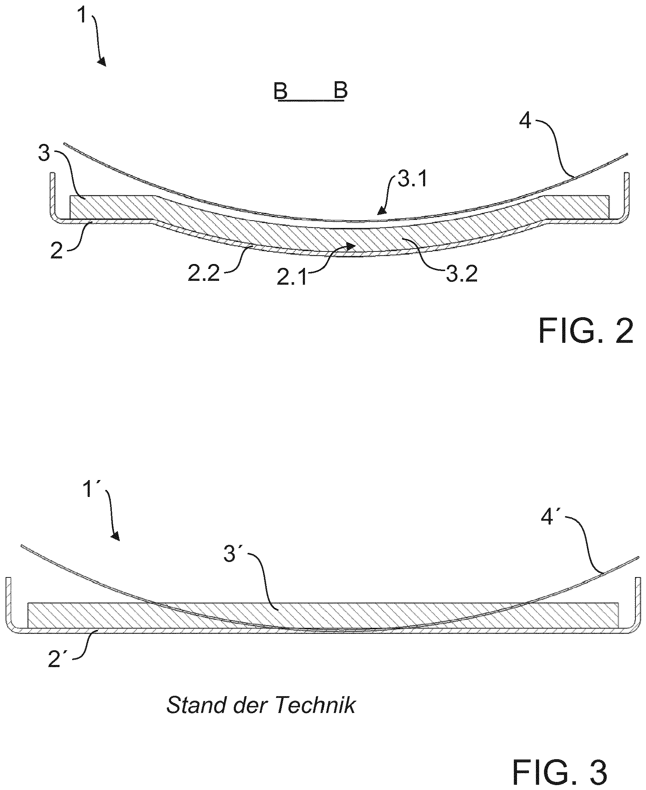

Kotflügel zur Abdeckung von Nutzfahrzeugrädern sind im Stand der Technik in den unterschiedlichsten Ausführungsformen bekannt. Eine Herausforderung ist dabei, eine Maxi-malbereifung mit Schneekette unter Berücksichtigung oder Erfüllung insbesondere der Richtlinie ECE-R54 zu ermöglichen. Figur 3 zeigt eine Schnittansicht eines aus der Praxis bekannten Kotflügels 1'. Der Kotflügel 1' umfasst einen hinteren Wandabschnitt 2' und eine an der Innenseite des Wandabschnitts 2' angebrachte Spritzschutzmatte 3'. Eine Radhüllkurve 4' bildet die Bewegungen eines Nutzfahrzeugrads mit Schneekette ab. Figur 3 zeigt also, dass der Kotflügel 1' eigentlich nicht ausreichend Platz für eine Schneekettenbereifung aufweist. Zu diesem Zweck ist der Kotflügel 1' mehrteilig ausgeführt und umfasst eine manuelle Längenvariabilitätsfunktion, so dass der hintere Wandabschnitt 2' des Kotflügels 1 nach hinten verschiebbar ist, um so Platz für eine Bereifung mit Schneekette zu schaffen. Nachteilhaft daran ist insbesondere, dass die Längenvariabilitätsfunktion die Komplexität des Kotflügels 1' erhöht und das erforderliche manuelle Verlängern des Kotflügels 1' zeitaufwendig ist.

Eine Aufgabe der Erfindung ist es, einen alternativen und/oder verbesserten Kotflügel zu schaffen, vorzugsweise einen Kotflügel, der bei geringem Platzbedarf des Kotflügels und z. B. einer Spritzschutzmatte zugleich eine Maximalbereifung mit Schneekette und vorzugsweise unter Einhaltung der Richtlinie ECE-R54 ermöglicht.

Diese Aufgabe wird mit den Merkmalen des Hauptanspruchs gelöst. Vorteilhafte Weiterbildungen der Erfindung können den Unteransprüchen und der folgenden Beschrei-bung entnommen werden.

Die Erfindung betrifft einen Kotflügel für ein Fahrzeug, z. B. Kraftfahrzeug, vorzugsweise ein Nutzfahrzeug, z. B. einen Lastkraftwagen oder einen Omnibus. Der Kotflügel umfasst zumindest einen Wandabschnitt zum zumindest abschnittsweisen Abdecken eines Fahrzeugrads und eine Spritzschutzmatte an einer Innenseite des zumindest einen Wandabschnitts.

Der Kotflügel zeichnet sich insbesondere dadurch aus, dass der zumindest eine Wandabschnitt und/oder die Spritzschutzmatte um eine Vertiefung erweitert ist, z. B. so, dass das Fahrzeug ohne und mit auf dem Fahrzeugrad aufgebrachter Schneekette fahrbar ist und vorzugsweise das Fahrzeugrad eine Maximalbereifung darstellt.

Die Vertiefung des Wandabschnitts und/oder die Vertiefung der Spritzschutzmatte ermöglicht insbesondere, dass bei minimalen Platzbedarf des Kotflügels und/oder der Spritzschutzmatte gleichzeitig eine Maximalbereifung mit Schneekette unter Einhaltung insbesondere der ECE-R54 realisiert werden kann.

Die Vertiefung des zumindest einen Wandabschnitts und/oder die Vertiefung der Spritzschutzmatte dient vorzugsweise zur zumindest abschnittsweisen Aufnahme einer Schneekette für das Fahrzeugrad.

Der zumindest eine Wandabschnitt stellt vorzugsweise einen hinteren Wandabschnitt des Kotflügels dar.

Die Vertiefung des zumindest einen Wandabschnitts kann z. B. durch eine vorzugsweise gewölbte Verformung und/oder Ausbauchung des zumindest einen Wandabschnitts zur Außenseite des zumindest einen Wandabschnitts erzeugt werden.

Die Vertiefung des zumindest einen Wandabschnitts verläuft vorzugsweise räumlich begrenzt in dem Wandabschnitt, vorzugsweise relativ zur Breitenerstreckung und/oder Längserstreckung des Wandabschnitts, z. B. also so, dass sich die Vertiefung des zumindest einen Wandabschnitts nicht über die gesamte Breite und/oder Länge des Wandabschnitts erstreckt.

Es ist möglich, dass die Spritzschutzmatte eine hintere Spritzschutzmatte des Kotflügels darstellt.

Die Vertiefung der Spritzschutzmatte kann z. B. durch eine vorzugsweise gewölbte Verformung und/oder Ausbauchung der Spritzschutzmatte zur Außenseite der Spritzschutzmatte erzeugt werden.

Die Vertiefung der Spritzschutzmatte verläuft vorzugsweise räumlich begrenzt in der Spritzschutzmatte, vorzugsweise relativ zur Breitenerstreckung und/oder Längserstreckung der Spritzschutzmatte, also z. B. so, dass sich die Vertiefung der Spritzschutzmatte vorzugsweise nicht über die gesamte Breite und/oder Länge der Spritzschutzmatte erstreckt.

Gemäß der Erfindung ist vorgesehen, dass die Spritzschutzmatte im Bereich ihrer Vertiefung und/oder mit ihrer Verformung und/oder Ausbauchung in der Vertiefung des zumindest einen Wandabschnitts verläuft und/oder in die Vertiefung des zumindest einen Wandabschnitts eingeformt ist.

Die Vertiefung des zumindest einen Wandabschnitts und/oder die Vertiefung der Spritzschutzmatte wird z. B. durch eine Materialverformung und/oder eine Materialwölbung erzeugt und somit vorzugsweise nicht durch eine Materialreduzierung des zumindest einen Wandabschnitts und/oder der Spritzschutzmatte.

Der Kotflügel kann mehrere Wandabschnitte umfassen. Der Kotflügel kann zweckmäßig aus z. B. mehreren aneinander befestigten Wandabschnitten aufgebaut sein oder aus einem einstückig-integralen, die Wandabschnitte umfassenden Bauteil.

Es ist möglich, dass der zumindest eine Wandabschnitt einen vorderen Wandabschnitt des Kotflügels darstellt und/oder einen oberen Wandabschnitt des Kotflügels darstellt. Der Kotflügel kann somit einen hinteren, oberen und/oder unteren Wandabschnitt umfassen.

Die Spritzschutzmatte kann zweckmäßig z. B. aus mehreren aneinander befestigten oder voneinander separierten Spritzschutzmatten aufgebaut sein oder als einstückiges-integrales Bauteil ausgeführt sein.

Die Vertiefung des zumindest einen Wandabschnitts und/oder die Vertiefung der Spritzschutzmatte und somit der Kotflügel sind zweckmäßig an das Raumerfordernis des Fahrzeugrads mit Schneekette angepasst, vorzugsweise an eine Maximalbereifung mit Schneekette. Alternativ oder ergänzend kann die Vertiefung des zumindest einen Wandabschnitts und/oder die Vertiefung der Spritzschutzmatte insbesondere zur abschnittsweisen Aufnahme einer Schneekette dienen.

Es ist insbesondere möglich, dass der Kotflügel eine Aufnahme des Fahrzeugrads in bzw. mit Maximalbereifung und mit Schneekette ermöglicht, z. B. unter Einhaltung der ECE-R54.

Der Kotflügel umfasst vorzugsweise keine manuelle Längenvariabilitätsfunktion.

Die Erfindung betrifft auch ein Fahrzeug, insbesondere Kraftfahrzeug, vorzugsweise Nutzfahrzeug, z. B. einen Omnibus oder Lastkraftwagen, mit zumindest einem Kotflügel wie hierin offenbart.

Die oben beschriebenen bevorzugten Ausführungsformen der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht eines Wandabschnitts eines Kotflügels gemäß einer Ausführungsform der Erfindung,
- Figur 2: zeigt eine Schnittansicht entlang Linie A-A der Figur 1 und
- Figur 3: zeigt eine Schnittansicht eines Kotflügels gemäß Stand der Technik.

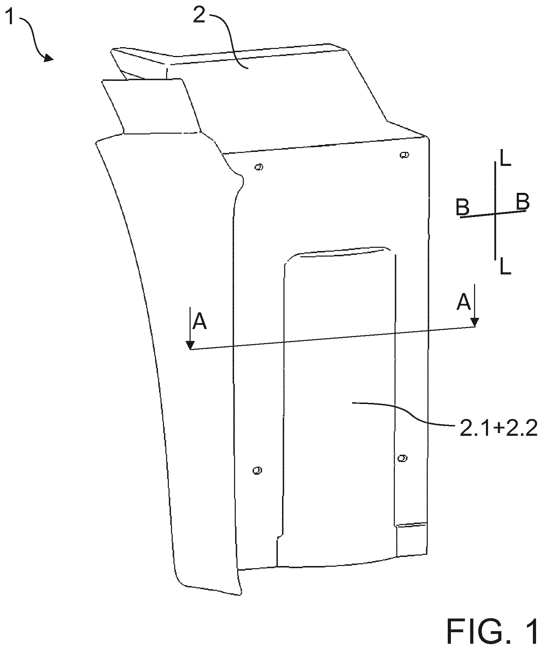

Figur 1 zeigt eine perspektivische Ansicht eines Wandabschnitts 2 eines Kotflügels 1 gemäß einer Ausführungsform der Erfindung, wobei Figur 2 eine zugehörige Schnittansicht entlang Linie A-A der Figur 1 zeigt. Der Kotflügel 1 wird nachfolgend unter gemeinsamer Bezugnahme auf die Figuren 1 und 2 beschrieben.

Der Wandabschnitt 2 stellt einen hinteren Wandabschnitt des Kotflügels 1 dar und dient zum abschnittsweisen Abdecken eines Kraftfahrzeugrads.

Eine Spritzschutzmatte 3 ist an einer Innenseite des Wandabschnitts 2 angeordnet, so dass die Spritzschutzmatte 3 eine hintere Spritzschutzmatte darstellt.

Der Wandabschnitt 2 ist um eine Vertiefung 2.1 erweitert. Ebenso ist die Spritzschutzmatte 3 um eine Vertiefung 3.1 erweitert. Dadurch wird ermöglicht, dass das Kraftfahrzeug auch mit auf dem Kraftfahrzeugrad aufgebrachter Schneekette gefahren werden kann, obwohl das Kraftfahrzeugrad eine Maximalbereifung darstellt. Die Vertiefungen 2.1 und 3.1 ermöglichen insbesondere, dass bei minimalem oder zumindest reduziertem Platzbedarf des Kotflügels 1 und der Spritzschutzmatte 3, gleichzeitig die Maximalbereifungen mit Schneeketten unter Berücksichtigung der Richtlinie ECE-R54 realisierbar ist. Der freigewordene Raum kann zweckmäßig für andere Kraftfahrzeugkomponenten genutzt werden.

Die Vertiefung 2.1 des Wandabschnitts 2 wird durch eine gewölbte Verformung 2.2 und/oder Ausbauchung 2.2 des Wandabschnitts 2 zur Außenseite des zumindest einen Wandabschnitts 2 erzeugt. Die Vertiefung 2.1 des Wandabschnitts 2 verläuft räumlich begrenzt in dem Wandabschnitt 2, vorzugsweise relativ zur Breitenerstreckung B und/oder Längserstreckung L des Wandabschnitts 2, so dass sich die Vertiefung 2.1 insbesondere nicht über die gesamte Breite und/oder Länge des Wandabschnitts 2 erstreckt.

Auch die Vertiefung 3.1 der Spritzschutzmatte 3 wird durch eine gewölbte Verformung 3.2 und/oder Ausbauchung 3.2 der Spritzschutzmatte 3 zur Außenseite der Spritzschutzmatte 3 erzeugt. Die Vertiefung 3.1 der Spritzschutzmatte 3 verläuft räumlich begrenzt in der Spritzschutzmatte 3, vorzugsweise relativ zur Breitenerstreckung B und/oder Längserstreckung L der Spritzschutzmatte 3, so dass sich die Vertiefung 3.1 insbesondere nicht über die gesamte Breite und/oder Länge der Spritzschutzmatte 3 erstreckt.

Die Spritzschutzmatte 3 verläuft im Bereich ihrer Vertiefung 3.1 und somit insbesondere mit ihrer Verformung 3.2 und/oder Ausbauchung 3.2 zumindest abschnittsweise in der Vertiefung 2.1 des Wandelements 2. Besonderes bevorzugt ist, wenn die Spritzschutzmatte 3 im Bereich ihrer Vertiefung 3.1 und somit insbesondere mit ihrer Verformung 3.2 und/oder Ausbauchung 3.2 zumindest abschnittsweise in die Vertiefung 2.1 eingeformt ist.

Die Vertiefung 2.1 des Wandelements 2 und die Vertiefung 3.1 der Spritzschutzmatte 3 sind durch eine Materialverformung und/oder eine Materialwölbung erzeugt, vorzugsweise ohne Materialreduzierung.

Bezugszeichen 4 kennzeichnet eine Radhüllkurve, die die Bewegungen des Kraftfahrzeugrads in Maximalbereifung und mit Schneekette abbildet. Die Radhüllkurve 4 zeigt somit schematisch, dass die Vertiefung 2.1 des Wandabschnitts 2 und die Vertiefung 3.1 der Spritzschutzmatte 3 an das Raumerfordernis des Kraftfahrzeugrads mit Schneekette angepasst sind, so dass die Vertiefung 3.1 der Spritzschutzmatte 3 zur abschnittsweisen Aufnahme der Schneekette dient.

Der Kotflügel 1 ist vorzugsweise ohne Längenvariabilitätsfunktion ausgeführt.

Zu erwähnen ist, dass der Kotflügel 1 auch ohne Spritzschutzmatte 3 realisiert werden kann, so dass z. B. die Vertiefung 2.1 des Wandabschnitts 2 3 zur abschnittsweisen Aufnahme der Schneekette dienen kann.

Zu erwähnen ist ferner, dass nicht nur der hintere Wandabschnitt 2 mit einer Vertiefung wie hierin beschrieben versehen sein kann, sondern auch z. B. auch ein oberer und/oder unterer Wandabschnitt des Kotflügels 1.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 1: Kotflügel
- 2: Wandabschnitt
- 2.1: Vertiefung
- 2.2: Verformung und/oder Ausbauchung
- 3: Spritzschutzmatte
- 3.1: Vertiefung
- 4.2: Verformung und/oder Ausbauchung
- 4: Radhüllkurve für Fahrzeugrad mit aufgesetzter Schneekette
- A-A: Längserstreckung
- B-B: Breitenerstreckung

## Patentansprüche

1. Kotflügel (1) für ein Fahrzeug, vorzugsweise Kraftfahrzeug, mit zumindest einem Wandabschnitt (2) zum zumindest abschnittsweisen Abdecken eines Fahrzeugrads und einer Spritzschutzmatte (3) an einer Innenseite des zumindest einen Wandabschnitts (2), wobei der zumindest eine Wandabschnitt (2) und/oder die Spritzschutzmatte (3) um eine Vertiefung (2.1, 3.1) erweitert ist, so dass vorzugsweise das Fahrzeug ohne und mit auf dem Fahrzeugrad aufgebrachter Schneekette fahrbar ist, **dadurch gekennzeichnet, dass** die Spritzschutzmatte (3) im Bereich ihrer Vertiefung (3.1) und/oder mit ihrer Verformung (3.2) und/oder Ausbauchung (3.2) in der Vertiefung (2.1) des zumindest einen Wandabschnitts (2) verläuft und/oder in die Vertiefung (2.1) des zumindest einen Wandabschnitts (2) eingeformt ist.

2. Kotflügel (1) nach Anspruch 1, **dadurch gekennzeichnet, dass** der zumindest eine Wandabschnitt (2) einen hinteren Wandabschnitt (2) des Kotflügels (1) darstellt.

3. Kotflügel (1) nach Anspruch 1 oder 2, **dadurch gekennzeichnet, dass** die Vertiefung (2.1) des zumindest einen Wandabschnitts (2) durch eine vorzugsweise gewölbte Verformung (2.2) und/oder Ausbauchung (2.2) des zumindest einen Wandabschnitts (2) zur Außenseite des zumindest einen Wandabschnitts (2) erzeugt wird.

4. Kotflügel (1) nach einem der vorhergehenden Ansprüche, **dadurch gekennzeichnet, dass** die Vertiefung (2.1) des zumindest einen Wandabschnitts (2) räumlich begrenzt in dem Wandabschnitt (2) verläuft, vorzugsweise relativ zur Breitenerstreckung (B) und/oder Längserstreckung (L) des Wandabschnitts (2).

5. Kotflügel (1) nach einem der vorhergehenden Ansprüche, **dadurch gekennzeichnet, dass** die Spritzschutzmatte (3) eine hintere Spritzschutzmatte (3) des Kotflügels (1) darstellt.

6. Kotflügel (1) nach einem der vorhergehenden Ansprüche, **dadurch gekennzeichnet, dass** die Vertiefung (3.1) der Spritzschutzmatte (3) durch eine vorzugsweise gewölbte Verformung (3.2) und/oder Ausbauchung (3.2) der Spritzschutzmatte (3) zur Außenseite der Spritzschutzmatte (3) erzeugt wird.

7. Kotflügel (1) nach einem der vorhergehenden Ansprüche, **dadurch gekennzeichnet, dass** die Vertiefung (3.1) der Spritzschutzmatte (3) räumlich begrenzt in der Spritzschutz-matte (3) verläuft, vorzugsweise relativ zur Breitenerstreckung (B) und/oder Längserstreckung (L) der Spritzschutzmatte (3).

8. Kotflügel (1) nach einem der vorhergehenden Ansprüche, **dadurch gekennzeichnet, dass** die Vertiefung (2.1) des zumindest einen Wandabschnitts (2) und/oder die Vertiefung (3.1) der Spritzschutzmatte (3) durch eine Materialverformung und/oder eine Materialwölbung erzeugt wird.

9. Kotflügel (1) nach einem der vorhergehenden Ansprüche, **dadurch gekennzeichnet, dass** der zumindest eine Wandabschnitt einen vorderen Wandabschnitt des Kotflügels (1) darstellt und/oder einen oberen Wandabschnitt des Kotflügels (1) darstellt.

10. Kotflügel (1) nach einem der vorhergehenden Ansprüche, **dadurch gekennzeichnet, dass** die Vertiefung (2.1) des zumindest einen Wandabschnitts (2) und/oder die Vertiefung (3.1) der Spritzschutzmatte (3)
- an das Raumerfordernis eines Fahrzeugrads mit Schneekette angepasst ist, vorzugsweise eine Maximalbereifung mit Schneekette, und/oder
- zur abschnittsweisen Aufnahme einer Schneekette dient.

11. Kotflügel (1) nach einem der vorhergehenden Ansprüche, **dadurch gekennzeichnet, dass** der Kotflügel (1) eine Aufnahme eines Fahrzeugrads in Maximalbereifung und zusätzlich mit Schneekette ermöglicht.

12. Kotflügel (1) nach einem der vorhergehenden Ansprüche, **dadurch gekennzeichnet, dass** der Kotflügel (1) ohne Längenvariabilitätsfunktion ausgeführt ist.

13. Fahrzeug, vorzugsweise Kraft- oder Nutzfahrzeug, mit zumindest einem Kotflügel (1) nach einem der vorhergehenden Ansprüche.

## Claims

1. A mud wing (1) for a vehicle, preferably a motor vehicle, having at least one wall portion (2) for covering at least in portions a vehicle wheel, and a splashguard mat (3) on an internal side of the at least one wall portion (2), wherein the at least one wall portion (2) and/or the splashguard mat (3) are/is extended by a depression (2.1, 3.1) such that the vehicle is preferably capable of being driven with or without a snow chain fitted to the vehicle wheel, **characterized in that** the splashguard mat (3) in the region of the depression (3.1) thereof, and/or by way of the deformation (3.2) and/or convexity (3.2) thereof, runs in the depression (2.1) of the at least one wall portion (2), and/or is moulded into the depression (2.1) of the at least one wall portion (2).

2. The mud wing (1) according to Claim 1, **characterized in that** the at least one wall portion (2) represents a rear wall portion (2) of the mud wing (1).

3. The mud wing (1) according to Claim 1 or 2, **characterized in that** the depression (2.1) of the at least one wall portion (2) is generated by a preferably bulged deformation (2.2) and/or concavity (2.2) of the at least one wall portion (2) towards the external side of the at least one wall portion (2).

4. The mud wing (1) according to one of the preceding claims, **characterized in that** the depression (2.1) of the at least one wall portion (2) runs so as to be spatially delimited in the wall portion (2), preferably in a manner relative to the width extent (B) and/or the length extent (L) of the wall portion (2) .

5. The mud wing (1) according to one of the preceding claims, **characterized in that** the splashguard mat (3) represents a rear splashguard mat (3) of the mud wing (1).

6. The mud wing (1) according to one of the preceding claims, **characterized in that** the depression (3.1) of the splashguard mat (3) is generated by a preferably bulged deformation (3.2) and/or concavity (3.2) of the splashguard mat (3) towards the external side of the splashguard mat (3).

7. The mud wing (1) according to one of the preceding claims, **characterized in that** the depression (3.1) of the splashguard mat (3) runs so as to be spatially delimited in the splashguard mat (3), preferably in a manner relative to the width extent (B) and/or the length extent (L) of the splashguard mat (3).

8. The mud wing (1) according to one of the preceding claims, **characterized in that** the depression (2.1) of the at least one wall portion (2), and/or the depression (3.1) of the splashguard mat (3), are/is generated by a material deformation and/or a material concavity.

9. The mud wing (1) according to one of the preceding claims, **characterized in that** the at least one wall portion represents a front wall portion of the mud wing (1) and/or an upper wall portion of the mud wing (1).

10. The mud wing (1) according to one of the preceding claims, **characterized in that** the depression (2.1) of the at least one wall portion (2), and/or the depression (3.1) of the splashguard mat (3)
- are/is adapted to the space requirement of a vehicle wheel with a snow chain, preferably to a maximum tyre size with a snow chain, and/or
- in portions serve/serves for receiving a snow chain.

11. The mud wing (1) according to one of the preceding claims, **characterized in that** the mud wing (1) enables a vehicle wheel with a maximum tyre size and additionally a snow chain to be received.

12. The mud wing (1) according to one of the preceding claims, **characterized in that** the mud wing (1) is embodied without a length-variability function.

13. A vehicle, preferably a motor vehicle or a commercial vehicle, having at least one mud wing (1) according to one of the preceding claims.

## Revendications

1. Garde-boue (1) pour un véhicule, de préférence pour un véhicule automobile, comprenant au moins une portion de paroi (2) destinée à recouvrir au moins en partie une roue de véhicule et une bavette anti-projection (3) au niveau d'un côté intérieur de l'au moins une portion de paroi (2), l'au moins une portion de paroi (2) et/ou la bavette anti-projection (3) étant élargie (s) par un renfoncement (2.1, 3.1) de telle sorte que de préférence le véhicule puisse être conduit avec et sans chaîne à neige montée sur la roue du véhicule, **caractérisé en ce que** la bavette anti-projection (3) s'étend dans la région de son renfoncement (3.1) et/ou avec sa déformation (3.2) et/ou son bombement (3.2) dans le renfoncement (2.1) de l'au moins une portion de paroi (2) et/ou est formée dans le renfoncement (2.1) de l'au moins une portion de paroi (2).

2. Garde-boue (1) selon la revendication 1, **caractérisé en ce que** l'au moins une portion de paroi (2) constitue une portion de paroi arrière (2) du garde-boue (1).

3. Garde-boue (1) selon la revendication 1 ou 2, **caractérisé en ce que** le renfoncement (2.1) de l'au moins une portion de paroi (2) est produit par une déformation de préférence cintrée (2.2) et/ou par un bombement (2.2) de l'au moins une portion de paroi (2) vers le côté extérieur de l'au moins une portion de paroi (2).

4. Garde-boue (1) selon l'une quelconque des revendications précédentes, **caractérisé en ce que** le renfoncement (2.1) de l'au moins une portion de paroi (2) s'étend dans la portion de paroi (2) de manière limitée spatialement, de préférence par rapport à l'étendue en largeur (B) et/ou l'étendue en longueur (L) de la portion de paroi (2).

5. Garde-boue (1) selon l'une quelconque des revendications précédentes, **caractérisé en ce que** la bavette anti-projection (3) constitue une bavette anti-projection arrière (3) du garde-boue (1) .

6. Garde-boue (1) selon l'une quelconque des revendications précédentes, **caractérisé en ce que** le renfoncement (3.1) de la bavette anti-projection (3) est produit par une déformation (3.2) de préférence cintrée et/ou un bombement (3.2) de la bavette anti-projection (3) vers le côté extérieur de la bavette anti-projection (3).

7. Garde-boue (1) selon l'une quelconque des revendications précédentes, **caractérisé en ce que** le renfoncement (3.1) de la bavette anti-projection (3) s'étend dans la bavette anti-projection (3) de manière limitée spatialement, de préférence par rapport à l'étendue en largeur (B) et/ou l'étendue en longueur (L) de la bavette anti-projection (3).

8. Garde-boue (1) selon l'une quelconque des revendications précédentes, **caractérisé en ce que** le renfoncement (2.1) de l'au moins une portion de paroi (2) et/ou le renfoncement (3.1) de la bavette anti-projection (3) est produit par une déformation de matériau et/ou un cintrage de matériau.

9. Garde-boue (1) selon l'une quelconque des revendications précédentes, **caractérisé en ce que** l'au moins une portion de paroi constitue une portion de paroi avant du garde-boue (1) et/ou constitue une portion de paroi supérieure du garde-boue (1).

10. Garde-boue (1) selon l'une quelconque des revendications précédentes, **caractérisé en ce que** le renfoncement (2.1) de l'au moins une portion de paroi (2) et/ou le renfoncement (3.1) de la bavette anti-projection (3)
- est adapté aux exigences spatiales d'une roue de véhicule avec une chaîne à neige, de préférence avec un pneumatique de taille maximale avec une chaîne à neige, et/ou
- sert à recevoir en partie une chaîne à neige.

11. Garde-boue (1) selon l'une quelconque des revendications précédentes, **caractérisé en ce que** le garde-boue (1) permet de recevoir une roue de véhicule avec un pneumatique de taille maximale ainsi qu'avec une chaîne à neige.

12. Garde-boue (1) selon l'une quelconque des revendications précédentes, **caractérisé en ce que** le garde-boue (1) est réalisé sans fonction de variabilité de longueur.

13. Véhicule, de préférence véhicule automobile ou véhicule utilitaire, comprenant au moins un garde-boue (1) selon l'une quelconque des revendications précédentes.
